# EUROPEAN PATENT SPECIFICATION

(11) **EP 4 391 503 B1**
(45) Date of publication and mention of the grant of the patent: **01.10.2025**
(21) Application number: 23821850.7
(22) Date of filing: 10.04.2023
(51) Int. Cl.: H04M 1/02, H01M 50/204, H01M 50/247, H01M 50/282

(54) **ELECTRONIC DEVICE**
ELEKTRONISCHE VORRICHTUNG
DISPOSITIF ÉLECTRONIQUE

(30) Priority: 24.10.2022 CN 202222809177 U
(43) Date of publication of application: 26.06.2024
(73) Proprietor: Honor Device Co., Ltd., Shenzhen, Guangdong 518040 (CN)
(72) Inventor: YAN, Zizhi, Shenzhen, Guangdong 518040 (CN)
(74) Representative: Gill Jennings & Every LLP
(86) International application number: PCT/CN2023/087254
(87) International publication number: WO 2024/087527

(56) References cited:
- CN-A- 107 426 367
- CN-A- 115 022 493
- CN-U- 209 787 208
- CN-U- 213 879 944
- CN-U- 217 445 412
- US-A1- 2019 173 988

## Description

### TECHNICAL FIELD

This application relates to the field of electronic technologies, and specifically, to an electronic device.

### BACKGROUND

In recent years, polyurethane (PU) is favored by a consumer electronics industry due to excellent appearance, good hand feeling, and dirt resistance of the polyurethane. Especially in a mobile phone industry, a PU battery cover (a battery cover made of a polyurethane material) has gradually become an essential of a high-end flagship phone.

However, a traditional assembly manner of the PU battery cover and a decoration member in a camera assembly has poor sealing performance and a high cost. In addition, the PU battery cover is prone to degumming when the camera assembly is subjected to external force, and a risk of failure is high. CN115022493A discloses an electronic device with a back cover incorporating a flash module within a recess to optimize space utilization for rear camera modules.

### SUMMARY

To overcome the foregoing problem in the conventional technologies, a main objective of this application is to provide an electronic device with good sealing performance, a low cost, and a low risk of failure.

To achieve the foregoing objective, the following technical solutions are specifically used in this application.

This application provides an electronic device, including a battery cover and a camera assembly, where a mounting hole is arranged on the battery cover, and the camera assembly is mounted in the mounting hole, where
the battery cover includes a first cover layer and a second cover layer that are arranged in a stacked manner, and the first cover layer is located on an outer side of the second cover layer, where the first cover layer is made of a polyurethane material, and the second cover layer is made of a glass fiber material; and
the camera assembly includes a decoration member, the decoration member includes a first decoration portion and a second decoration portion, the first decoration portion is located on an outer side of the battery cover and is adhered to the second cover layer, and the second decoration portion is located on an inner side of the battery cover and is adhered to the second cover layer, where the first decoration portion partially covers the first cover layer.

In some embodiments, the second cover layer includes a connecting portion, the connecting portion extends in a circle center direction of the mounting hole, so that the connecting portion protrudes from the first cover layer, an inner surface of the first decoration portion is adhered to an outer surface of the connecting portion, and an outer surface of the second decoration portion is adhered to an inner surface of the connecting portion. In the embodiments, the connecting portion of the second cover layer extends in the circle center direction of the mounting hole, to protrude from the first cover layer, thereby facilitating adhering the inner surface of the first decoration portion to the outer surface of the connecting portion, and adhering the outer surface of the second decoration portion to the inner surface of the connecting portion. In addition, an adhesion area is increased, and adhesion stability is improved.

In some embodiments, the connecting portion and the first cover layer are in a first stepped structure. In the embodiments, the connecting portion and the first cover layer are arranged as the stepped structure, to be specific, the outer surface of the connecting portion and an outer surface of another part of the second cover layer are on the same plane. In this way, a manufacturing process is simple, and materials are reduced.

In some embodiments, the first decoration portion includes a covering surface, a connecting surface, and an adhesive surface, the covering surface is connected with the adhesive surface via the connecting surface, so that the covering surface and the adhesive surface form a second stepped structure, the second stepped structure cooperates with the first stepped structure, the covering surface covers an edge of the first cover layer, and the adhesive surface is adhered to the outer surface of the connecting portion. In the embodiments, the covering surface and the adhesive surface are arranged in the second stepped structure, and the second stepped structure cooperates with the first stepped structure, so that the adhesive surface is closer to the connecting portion compared to the covering surface, in other words, a distance between the adhesive surface and the connecting portion is reduced, and the adhesion between the adhesive surface and the connecting portion is more stable.

In some embodiments, the covering surface is arranged parallel to the adhesive surface, and the connecting surface is arranged as an inclined surface. In the embodiments, the connecting surface is arranged as the inclined surface, thereby avoiding interference between the connecting surface and the edge of the first cover layer, making assembly more convenient, and avoiding mutual wear between the first cover layer and the first decoration portion.

In some embodiments, the connecting portion extends in a direction of the first decoration portion, so that the outer surface of the connecting portion is flush with an outer surface of the first cover layer. In the embodiments, the outer surface of the connecting portion is flush with the outer surface of the first cover layer, so that the battery cover in the electronic device may be directly replaced with a glass battery cover when necessary, thereby reducing a cost.

In some embodiments, the electronic device further includes a first back adhesive layer, and the inner surface of the first decoration portion is adhered to the outer surface of the connecting portion through the first back adhesive layer.

In some embodiments, the electronic device further includes a glue dispensing layer, and the inner surface of the first decoration portion is adhered to the outer surface of the connecting portion through the glue dispensing layer.

In some embodiments, there are first back adhesive layers, where the two first back adhesive layers are arranged at an interval, and the glue dispensing layer is located between the two first back adhesive layers. In the embodiments, there are the two first back adhesive layers, the two first back adhesive layers are arranged at an interval, and the glue dispensing layer is located between the two first back adhesive layers. In this way, the first decoration portion is connected with the connecting portion through a plurality of back adhesive layers and the glue dispensing layer, thereby improving adhesion stability of the decoration member and the connecting portion.

In some embodiments, the electronic device further includes a second back adhesive layer, and the outer surface of the second decoration portion is adhered to the inner surface of the connecting portion through the second back adhesive layer. In the embodiments, the second decoration portion is connected with the connecting portion through the second back adhesive layer, thereby further improving the adhesion stability of the decoration member and the connecting portion.

Compared with the conventional technologies, in the embodiments, the decoration member is divided into the first decoration portion and the second decoration portion. The first decoration portion is located on the outer side of the battery cover and partially covers the edge of the first cover layer, the second decoration portion is located on the inner side of the battery cover, and both the first decoration portion and the second decoration portion are adhered to the second cover layer of the battery cover. Because the second cover layer is made of a glass fiber material and is good in adhesion, connection sealing performance and adhesive waterproof performance of the battery cover and the decoration member are improved. In addition, because the first decoration portion partially covers the edge of the first cover layer, there is no need to use a decoration ring, thereby reducing a cost. In addition, the first decoration portion and the second decoration portion are adhered to the inner surface and the outer surface of the second cover layer respectively. Therefore, the connection between the decoration member and the battery cover is stable, so that the battery cover can be prevented from degumming when the camera assembly is subjected to external force, and a risk of failure is low.

### BRIEF DESCRIPTION OF DRAWINGS

FIG. 1 is a diagram of an assembly structure of a battery cover and a camera assembly of an electronic device in the conventional technologies;
FIG. 2 is an enlarged partial cross-sectional view of the electronic device in FIG. 1;
FIG. 3 is a diagram of an assembly structure of a battery cover and a camera assembly of another electronic device in the conventional technologies;
FIG. 4 is an enlarged partial cross-sectional view of the electronic device in FIG. 3;
FIG. 5 is a diagram of an assembly structure of a battery cover and a camera assembly of another electronic device in the conventional technologies;
FIG. 6 is an enlarged partial cross-sectional view of the electronic device in FIG. 5;
FIG. 7 is a diagram of an assembly structure of a battery cover and a camera assembly of an electronic device according to an embodiment of this application;
FIG. 8 is an enlarged partial cross-sectional view of the electronic device in FIG. 7;
FIG. 9 is another enlarged partial cross-sectional view of the electronic device in FIG. 7;
FIG. 10 is a diagram of an assembly structure of a battery cover and a camera assembly of an electronic device according to another embodiment of this application; and
FIG. 11 is an enlarged partial cross-sectional view of the electronic device in FIG. 10.

Identifiers in the accompanying drawings:
1. Battery cover; 11. First cover layer; 12. Second cover layer; 121. Connecting portion; 2. Camera assembly; 21. Decoration member; 211. First decoration portion; 211a. Covering surface; 211b. Connecting surface; 211c. Adhesive surface; 212. Second decoration portion; 3. First back adhesive layer; 4. Glue dispensing layer; 5. Second back adhesive layer; 1'. PU battery cover; 11'. PU layer; 12'. Glass fiber layer; 2'. Camera assembly; 21'. Decoration member; 22'. Decoration ring; 3'. Back adhesive; 1". Glass battery cover; 2". Camera assembly; 21". First decoration portion; and 22". Second decoration portion.

### DESCRIPTION OF EMBODIMENTS

To make the object, technical solutions, and advantages of this application clear, the following further describes this application in detail with reference to the accompanying drawings and embodiments. It should be understood that the specific embodiments described herein are merely used to explain this application, but are not intended to limit this application.

In the descriptions of this application, the terms "first", "second" are merely used for descriptive objectives and are not to be understood as indicating or implying relative importance unless otherwise explicitly specified or limited; the term "a plurality of" means two or more unless otherwise specified or indicated; the term "connection", "fixed", and the like are to be understood broadly. For example, the "connection" may be a fixed connection, a detachable connection, an integral connection, or an electrical connection; it may be a direct connection, or an indirect connection through an intermediate medium. A person of ordinary skill in the art may understand the specific meanings of the foregoing terms in this application as the case may be.

In the description of this application, it should be understood that the position words such as "on", "under" described in embodiments of this application are described from the perspective shown in the accompanying drawings, and should not be understood as limiting the embodiments of this application. In addition, in the context, it should also be understood that when an element is referred to as being "on" or "under" another element, it can be directly connected "on" or "under" the another element, or be indirectly connected "on" or "under" the another element through an intermediate element.

An electronic device, such as a mobile phone, or a tablet computer, usually includes a battery cover, a screen, a battery, a circuit board, a camera assembly, and the like. The battery cover is connected with the screen to form an accommodation cavity. The battery and the circuit board are mounted in the accommodation cavity. In this way, the battery provides electrical energy for the entire electronic device, the circuit board controls work of the entire electronic device, and the screen displays relevant information. In addition, a mounting hole is arranged on the battery cover, and the camera assembly is mounted in the mounting hole of the battery cover. In this way, the electronic device may perform a shooting function through the camera assembly.

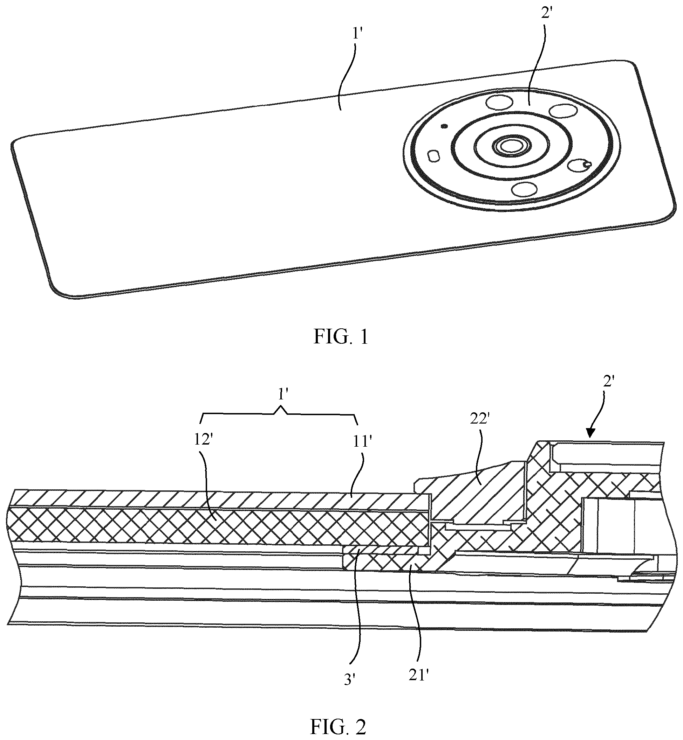

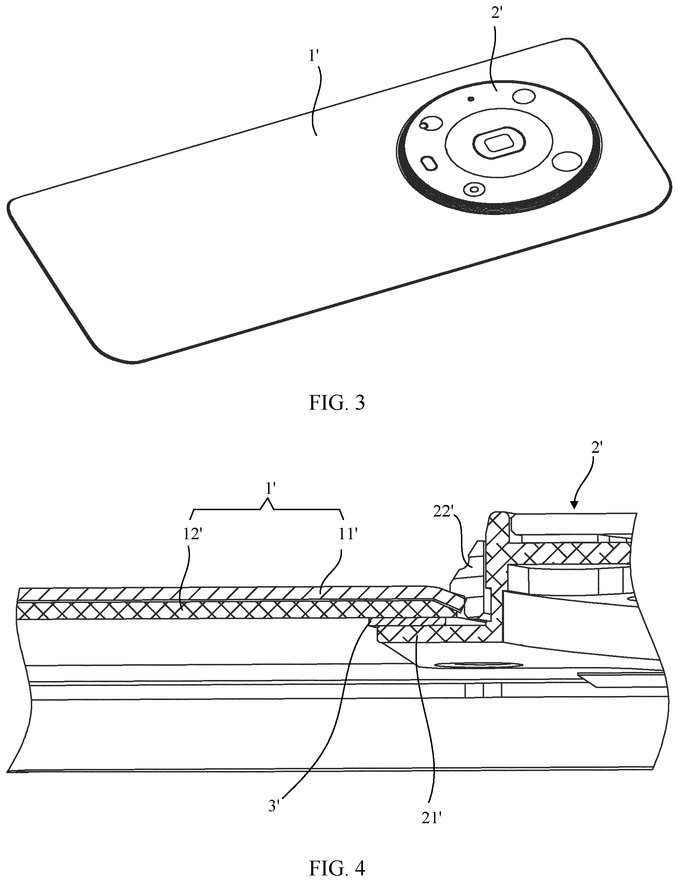

Polyurethane (PU) is favored by a consumer electronics industry due to excellent appearance, good hand feeling, and dirt resistance of the polyurethane. Especially in a mobile phone industry, a PU battery cover (a battery cover made of a polyurethane material) has gradually become an essential of a high-end flagship phone. Referring to FIG. 1 to FIG. 4, a traditional assembly manner of a PU battery cover 1' and a camera assembly 2' is as follows. After a PU layer 11' in the PU battery cover 1' is hot-pressed and attached with a glass fiber layer 12', a mounting hole for mounting the camera assembly 2' are arranged at a proper position as required, and an edge of the PU layer 11' and an edge of the glass fiber layer 12' are flush at the mounting hole. The camera assembly 2' is mounted in the mounting hole, so that a skirt edge of a decoration member 21' in the camera assembly 2' is adhered to an inner side of the glass fiber layer 12' through a back adhesive 3'. However, because the PU layer 11' has burrs on the edge thereof and is easy to peel off from the glass fiber layer 12', an additional decoration ring 22' is required to be added around the decoration member 21' to press and block the edge of the PU layer 11' through the decoration ring 22'. However, the foregoing assembly manner has the following problems. (1) The decoration member 21' and an inner side of the PU battery cover 1' are waterproof through a back adhesive, resulting in poor sealing performance. (2) Degumming easily occurs when the decoration member 21' is subjected to external force, resulting in a high risk of failure. (3) The additional decoration ring 22' is required to be added to block the edge of the PU layer 11', increasing a cost.

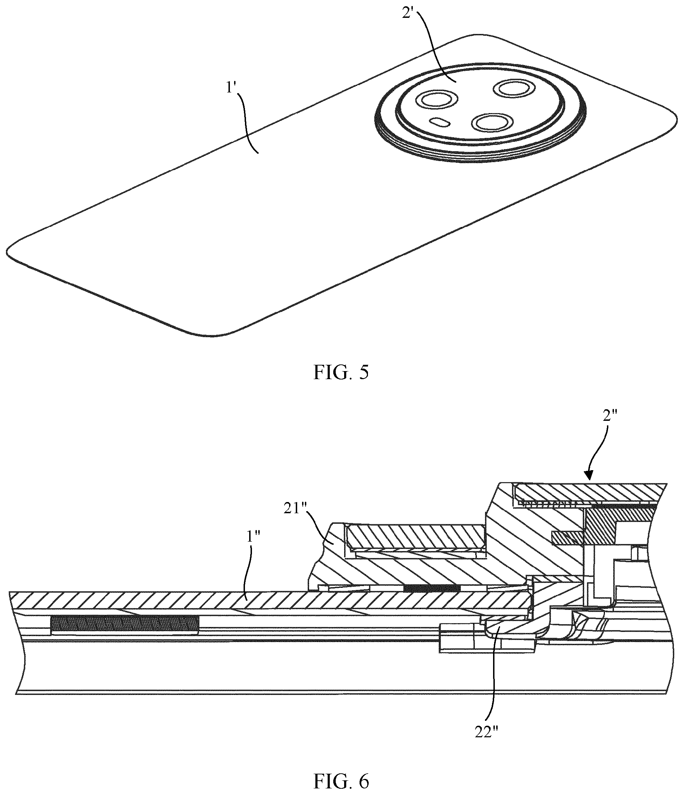

Referring to FIG. 5 to 6, a conventional assembly manner of a glass battery cover 1" and a camera assembly 2" is as follows. By using a disassembly manner, a decoration member is divided into two parts: a first decoration portion 21" and a second decoration portion 22", where the second decoration portion 22" is located on an inner side of the glass battery cover 1" and is adhered to an inner surface of the glass battery cover 1", and the first decoration portion 21" is located on an outer side of the glass battery cover 1" and is adhered to an outer surface of the glass battery cover 1", to block an edge of the glass battery cover 1" through the first decoration portion 21". In this way, a decoration ring can be cancelled, thereby reducing a cost and improving sealing performance. However, if the assembly solution is directly applied to a PU battery cover, there is a problem. For example, because PU is a compressible material, has poor adhesive waterproof performance, and cannot be used as an adhesive surface, if the first decoration portion is directly connected with an outer surface of the PU battery cover through adhesion, an IPX8 (waterproof level 8) waterproof rating may not be satisfied.

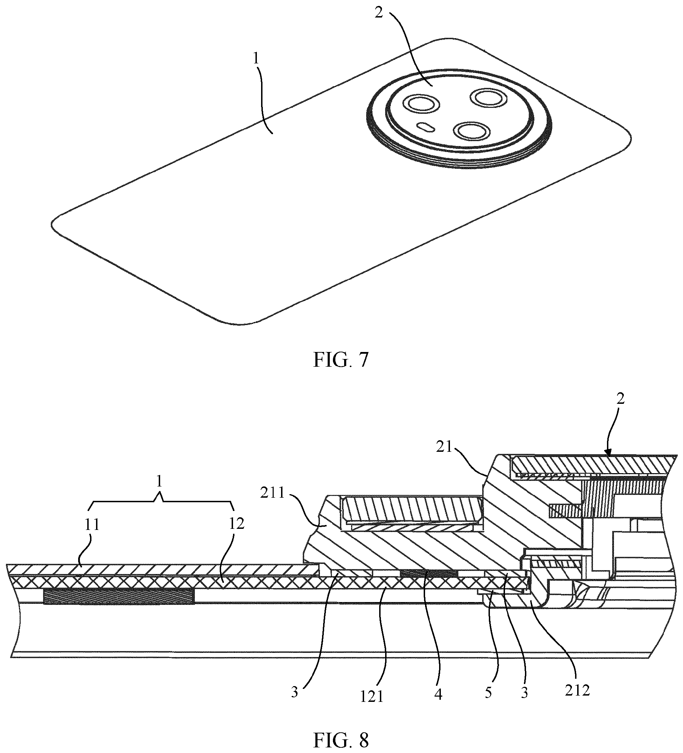

Referring to FIG. 7, FIG. 7 is a diagram of an assembly structure of a battery cover and a camera assembly of an electronic device according to an embodiment of this application. This embodiment of this application discloses an electronic device. The electronic device includes a battery cover 1, a camera assembly 2, a battery, a circuit board, and a screen. The battery cover 1 is connected with the screen to form an accommodation cavity, the battery and the circuit board are mounted in the accommodation cavity, and a mounting hole is arranged on the battery cover 1. The camera assembly 2 includes a decoration member and a camera. The decoration member is mounted in the mounting hole, and the camera is mounted on the decoration member. The battery is configured to provide electrical energy for the entire electronic device, the circuit board is configured to control work of the entire electronic device, the screen is configured to display relevant information, and the camera is configured to implement a shooting function of the electronic device.

Referring to FIG. 8, FIG. 8 is an enlarged partial cross-sectional view of the electronic device in FIG. 7. The battery cover 1 includes a first cover layer 11 and a second cover layer 12. The first cover layer 11 and the second cover layer 12 are arranged in a stacked manner, and the first cover layer 11 is located on an outer side of the second cover layer 12. The decoration member 21 includes a first decoration portion 211 and a second decoration portion 212. The first decoration portion 211 is located on an outer side of the battery cover 1 and is adhered to the second cover layer 12, and the first decoration portion 211 partially covers an edge of the first cover layer 11. The second decoration portion 212 is located on an inner side of the battery cover 1 and is adhered to the second cover layer 12. The first cover layer 11 is made of a polyurethane material, and the second cover layer 12 is made of a glass fiber material.

In this embodiment, the decoration member 21 is divided into the first decoration portion 211 and the second decoration portion 212. The first decoration portion 211 is located on the outer side of the battery cover 1 and partially covers the edge of the first cover layer 11, the second decoration portion 212 is located on the inner side of the battery cover 1, and both the first decoration portion 211 and the second decoration portion 212 are adhered to the second cover layer of the battery cover 1. In this way, connection sealing performance and adhesive waterproof performance of the battery cover 1 and the decoration member 21 are improved. In addition, there is no need to use a decoration ring, thereby reducing a cost. In addition, the battery cover 1 can be prevented from degumming when the camera assembly 2 is subjected to external force, and a risk of failure is low.

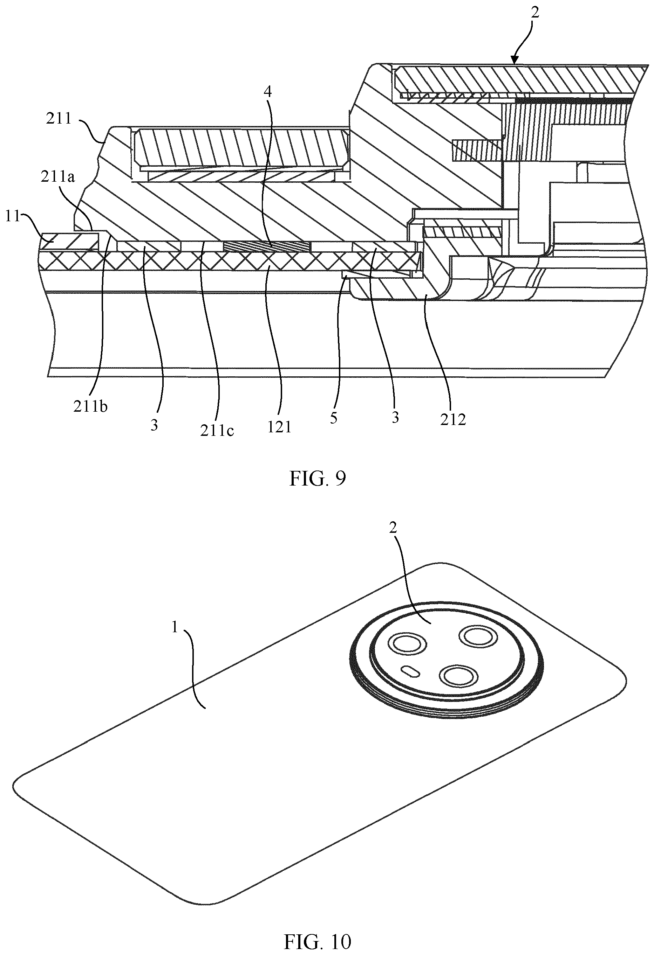

Referring to FIG. 9, FIG. 9 is another enlarged partial cross-sectional view of the electronic device in FIG. 7. The second cover layer 12 includes a stacked portion and a connecting portion 121, and the connecting portion 121 and the stacked portion are integrally formed. The stacked portion is hot-pressed and attached with an inner side of the first cover layer 11, and the connecting portion 121 extends in a circle center direction of the mounting hole, so that the connecting portion 121 protrudes from the first cover layer 11. The first decoration portion 211 is located on an outer side of the connecting portion 121 and partially covers the edge of the first cover layer 11, and an inner surface of the first decoration portion 211 is connected with an outer surface of the connecting portion 121 through adhesion. The second decoration portion 212 is located on an inner side of the connecting portion 121, and an outer surface of the second decoration portion 212 is connected with an inner surface of the connecting portion 121 through adhesion.

Specifically, the electronic device further includes a first back adhesive layer 3, a glue dispensing layer 4, and a second back adhesive layer 5. There are two first back adhesive layers 3, the two first back adhesive layers 3 are arranged on the connecting portion 121 at an interval, and the glue dispensing layer 4 is arranged on the connecting portion 121 and is located between the two first back adhesive layers 3. In this way, the inner surface of the first decoration portion 211 is adhered to the outer surface of the connecting portion 121 through a plurality of the first back adhesive layers 3 and the glue dispensing layer 4. The outer surface of the second decoration portion 212 is adhered to the inner surface of the connecting portion 121 through the second back adhesive layer 5. In this embodiment, there are the two first back adhesive layers 3, the two first back adhesive layers 3 are arranged at an interval, and the glue dispensing layer 4 is arranged between the two first back adhesive layers 3. In this way, the first decoration portion 211 is connected with the connecting portion through a plurality of back adhesive layers and the glue dispensing layer, thereby improving adhesion stability of the decoration member and the connecting portion.

In this embodiment, the outer surface of the connecting portion 121 and the outer surface of the first cover layer 11 are arranged in parallel and are not on a same plane, so that the connecting portion 121 and the first cover layer 11 are in a first stepped structure. The first decoration portion 211 includes a covering surface 211a, a connecting surface 211b, and an adhesive surface 211c. The covering surface 211a is connected with the adhesive surface 211c via the connecting surface 211b, the covering surface 211a and the adhesive surface 211c are arranged in parallel and are not on a same plane, and the connecting surface 211b is arranged as an inclined surface, so that the covering surface 211a and the adhesive surface 211c form a second stepped structure. The second stepped structure cooperates with the first stepped structure, to be specific, the covering surface 211a covers the edge of the first cover layer 11, and the adhesive surface 211c extends in a direction of the connecting portion 121, in other words, a distance between the adhesive surface and the outer surface of the connecting portion 121 is reduced, and the adhesive surface is connected with the outer surface of the connecting portion 121 through adhesion. In this embodiment, the covering surface 211a and the adhesive surface 211c are arranged in the second stepped structure, and the second stepped structure cooperates with the first stepped structure, so that the adhesive surface 211c is closer to the connecting portion 121 compared to the covering surface 211a, in other words, the distance between the adhesive surface 211c and the connecting portion 121 is reduced, and the adhesion between the adhesive surface 211c and the connecting portion 121 is more stable. In addition, the connecting surface 211b is arranged as the inclined surface, thereby avoiding interference between the connecting surface 211b and the edge of the first cover layer 11, making assembly more convenient, and avoiding mutual wear between the first cover layer and the first decoration portion.

In this embodiment, the first decoration portion 211 and the second decoration portion 212 are located on the inner side and the outer side of the battery cover 1 respectively, the first decoration portion 211 and the second decoration portion 212 are respectively connected with the second cover layer 12 through adhesion, and the first decoration portion 211 partially covers the edge of the first cover layer 11, so that a waterproof effect of the electronic device is improved. In addition, there is no need to use a decoration ring, thereby reducing a cost.

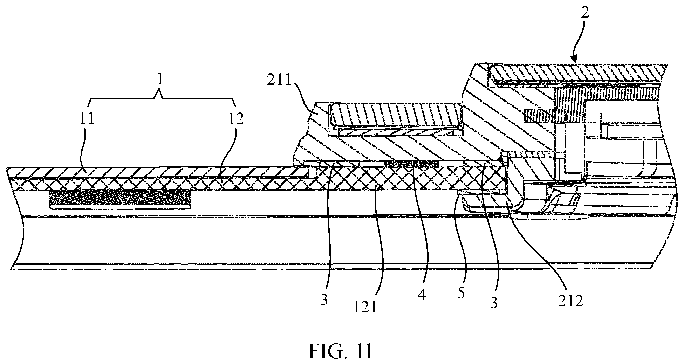

On the basis of the foregoing embodiments, another specific implementation is further disclosed in the embodiments of this application. The difference between this embodiment and the foregoing embodiments is that, as shown in FIG. 10 and FIG. 11, FIG. 10 is a diagram of an assembly structure of a battery cover and a camera assembly of an electronic device according to another embodiment of this application, and FIG. 11 is an enlarged partial cross-sectional view of the electronic device in FIG. 10. In this embodiment, the connecting portion 121 extends in the circle center direction of the mounting hole, so that the connecting portion 121 protrudes from the first cover layer 11 in a first direction; the connecting portion 121 also extends in the direction of the first decoration portion 211, so that the outer surface of the connecting portion 121 is flush with the outer surface of the first cover layer 11 in a second direction. In this way, the battery cover in the electronic device may be directly replaced with a glass battery cover when necessary, thereby reducing a cost.

In this embodiment, the first decoration portion 211 and the second decoration portion 212 are located on the inner side and the outer side of the battery cover 1 respectively, the first decoration portion 211 and the second decoration portion 212 are respectively connected with the second cover layer 12 through adhesion, and the first decoration portion 211 partially covers the edge of the first cover layer 11, so that a waterproof effect of the electronic device is improved. In addition, there is no need to use a decoration ring, thereby reducing a cost.

The foregoing descriptions are merely preferred specific implementations of this application, but are not intended to limit the protection scope of this application. Any modification or replacement readily conceived by a person skilled in the art within the technical scope disclosed in this application shall fall within the protection scope of this application. Therefore, the protection scope of this application shall be subject to the protection scope of the claims.

## Claims

1. An electronic device, comprising a battery cover (1) and a camera assembly (2), wherein a mounting hole is arranged on the battery cover (1), and the camera assembly (2) is mounted in the mounting hole, wherein
the battery cover (1) comprises a first cover layer (11) and a second cover layer (12) that are arranged in a stacked manner, and the first cover layer (11) is located on an outer side of the second cover layer (12), wherein the first cover layer (11) is made of a polyurethane material, and the second cover layer (12) is made of a glass fiber material; and
the camera assembly (2) comprises a decoration member (21), the decoration member (21) comprises a first decoration portion (211) and a second decoration portion (212), the first decoration portion (211) is located on an outer side of the battery cover (1) and is adhered to the second cover layer (12), and the second decoration portion (212) is located on an inner side of the battery cover (1) and is adhered to the second cover layer (12), wherein the first decoration portion (211) partially covers the first cover layer (11).

2. The electronic device according to claim 1, wherein the second cover layer (12) comprises a connecting portion (121), the connecting portion (121) extends in a circle center direction of the mounting hole, so that the connecting portion (121) protrudes from the first cover layer (11), an inner surface of the first decoration portion (211) is adhered to an outer surface of the connecting portion (121), and an outer surface of the second decoration portion (212) is adhered to an inner surface of the connecting portion (121).

3. The electronic device according to claim 2, wherein the connecting portion (121) and the first cover layer (11) are in a first stepped structure.

4. The electronic device according to claim 3, wherein the first decoration portion (211) comprises a covering surface (211a), a connecting surface (211b), and an adhesive surface (211c), the covering surface (211a) is connected with the adhesive surface (211c) via the connecting surface (211b), so that the covering surface (211a) and the adhesive surface (211c) form a second stepped structure, the second stepped structure cooperates with the first stepped structure, the covering surface (211a) covers an edge of the first cover layer (11), and the adhesive surface (211c) is adhered to the outer surface of the connecting portion (121).

5. The electronic device according to claim 4, wherein the covering surface (211a) is arranged parallel to the adhesive surface (211c), and the connecting surface (211b) is arranged as an inclined surface.

6. The electronic device according to claim 2, wherein the connecting portion (121) extends in a direction of the first decoration portion (211), so that the outer surface of the connecting portion (121) is flush with an outer surface of the first cover layer (11).

7. The electronic device according to any one of claims 2 to 6, wherein the electronic device further comprises a first back adhesive layer (3), and the inner surface of the first decoration portion (211) is adhered to the outer surface of the connecting portion (121) through the first back adhesive layer (3).

8. The electronic device according to claim 7, wherein the electronic device further comprises a glue dispensing layer (4), and the inner surface of the first decoration portion (211) is adhered to the outer surface of the connecting portion (121) through the glue dispensing layer (4).

9. The electronic device according to claim 8, wherein there are first back adhesive layers, wherein the two first back adhesive layers are arranged at an interval, and the glue dispensing layer (4) is located between the two first back adhesive layers.

10. The electronic device according to any one of claims 2 to 6, wherein the electronic device further comprises a second back adhesive layer (5), and the outer surface of the second decoration portion (212) is adhered to the inner surface of the connecting portion (121) through the second back adhesive layer (5).

## Patentansprüche

1. Elektronisches Gerät, umfassend eine Batteriedeckel (1) und eine Kameraeinheit (2), wobei auf dem Batteriedeckel (1) eine Montagemöffnung vorgesehen ist und die Kameraeinheit (2) in der Montagemöffnung angebracht ist, wobei
der Batteriedeckel (1) eine erste Deckschicht (11) und eine zweite Deckschicht (12) aufweist, die gestapelt angeordnet sind, wobei die erste Deckschicht (11) sich auf der Außenseite der zweiten Deckschicht (12) befindet, wobei die erste Deckschicht (11) aus Polyurethan besteht und die zweite Deckschicht (12) aus Glasfasermaterial besteht; und
die Kameraeinheit (2) ein Dekorationselement (21) umfasst, wobei das Dekorationselement (21) einen ersten Dekorationsabschnitt (211) und einen zweiten Dekorationsabschnitt (212) umfasst, wobei der erste Dekorationsabschnitt (211) sich auf der Außenseite des Batteriedeckels (1) befindet und an der zweiten Deckschicht (12) befestigt ist, und der zweite Dekorationsabschnitt (212) sich auf der Innenseite des Batteriedeckels (1) befindet und an der zweiten Deckschicht (12) befestigt ist, wobei der erste Dekorationsabschnitt (211) die erste Deckschicht (11) teilweise abdeckt.

2. Elektronisches Gerät nach Anspruch 1, wobei die zweite Deckschicht (12) einen Verbindungsabschnitt (121) umfasst, wobei der Verbindungsabschnitt (121) sich in Richtung des Kreismittelpunkts der Montagemöffnung erstreckt, sodass der Verbindungsabschnitt (121) aus der ersten Deckschicht (11) hervorsteht, wobei eine Innenfläche des ersten Dekorationsabschnitts (211) an einer Außenfläche des Verbindungsabschnitts (121) befestigt ist und eine Außenfläche des zweiten Dekorationsabschnitts (212) an einer Innenfläche des Verbindungsabschnitts (121) befestigt ist.

3. Elektronisches Gerät nach Anspruch 2, wobei der Verbindungsabschnitt (121) und die erste Deckschicht (11) eine erste abgestufte Struktur bilden.

4. Elektronisches Gerät nach Anspruch 3, wobei der erste Dekorationsabschnitt (211) eine Abdeckfläche (211a), eine Verbindungsfläche (211b) und eine Klebefläche (211c) umfasst, wobei die Abdeckfläche (211a) über die Verbindungsfläche (211b) mit der Klebefläche (211c) verbunden ist, sodass die Abdeckfläche (211a) und die Klebefläche (211c) eine zweite abgestufte Struktur bilden, wobei die zweite abgestufte Struktur mit der ersten abgestuften Struktur zusammenwirkt, wobei die Abdeckfläche (211a) einen Rand der ersten Deckschicht (11) abdeckt und die Klebefläche (211c) an der Außenfläche des Verbindungsabschnitts (121) befestigt ist.

5. Elektronisches Gerät nach Anspruch 4, wobei die Abdeckfläche (211a) parallel zur Klebefläche (211c) angeordnet ist und die Verbindungsfläche (211b) als geneigte Fläche ausgebildet ist.

6. Das elektronische Gerät nach Anspruch 2, wobei der Verbindungsabschnitt (121) sich in Richtung des ersten Dekorationsteils (211) erstreckt, so dass die Außenfläche des Verbindungsabschnitts (121) bündig mit der Außenfläche der ersten Deckschicht (11) ist.

7. Das elektronische Gerät nach einem der Ansprüche 2 bis 6, wobei das elektronische Gerät ferner eine erste rückseitige Klebeschicht (3) umfasst, und die Innenfläche des ersten Dekorationsteils (211) mittels der ersten rückseitigen Klebeschicht (3) an der Außenfläche des Verbindungsabschnitts (121) haftet.

8. Das elektronische Gerät nach Anspruch 7, wobei das elektronische Gerät ferner eine Klebeschicht zum Dispensieren (4) umfasst, und die Innenfläche des ersten Dekorationsteils (211) mittels der Klebeschicht zum Dispensieren (4) an der Außenfläche des Verbindungsabschnitts (121) haftet.

9. Das elektronische Gerät nach Anspruch 8, wobei es erste rückseitige Klebeschichten gibt, wobei die beiden ersten rückseitigen Klebeschichten mit einem Abstand angeordnet sind und sich die Klebeschicht zum Dispensieren (4) zwischen den beiden ersten rückseitigen Klebeschichten befindet.

10. Das elektronische Gerät nach einem der Ansprüche 2 bis 6, wobei das elektronische Gerät ferner eine zweite rückseitige Klebeschicht (5) umfasst, und die Außenfläche des zweiten Dekorationsteils (212) mittels der zweiten rückseitigen Klebeschicht (5) an der Innenfläche des Verbindungsabschnitts (121) haftet.

## Revendications

1. Dispositif électronique comprenant un couvercle de batterie (1) et un ensemble caméra (2), un trou de montage étant disposé sur le couvercle de batterie (1), et l'ensemble caméra (2) étant monté dans le trou de montage, **caractérisé en ce que**
le couvercle de batterie (1) comprend une première couche de couvercle (11) et une seconde couche de couvercle (12) disposées de manière empilée, la première couche de couvercle (11) étant située à l'extérieur de la seconde couche de couvercle (12), la première couche de couvercle (11) étant en matériau polyuréthane, et la seconde couche de couvercle (12) étant en matériau fibre de verre ; et
l'ensemble caméra (2) comprend un élément décoratif (21), l'élément décoratif (21) comprenant une première partie décorative (211) et une seconde partie décorative (212), la première partie décorative (211) étant placée à l'extérieur du couvercle de batterie (1) et collée à la seconde couche de couvercle (12), et la seconde partie décorative (212) étant placée à l'intérieur du couvercle de batterie (1) et collée à la seconde couche de couvercle (12), la première partie décorative (211) recouvrant partiellement la première couche de couvercle (11).

2. Dispositif électronique selon la revendication 1, dans lequel la seconde couche de couvercle (12) comprend une partie de connexion (121), la partie de connexion (121) s'étendant dans la direction du centre du trou de montage, de sorte que la partie de connexion (121) dépasse de la première couche de couvercle (11), une surface interne de la première partie décorative (211) étant collée à une surface externe de la partie de connexion (121), et une surface externe de la seconde partie décorative (212) étant collée à une surface interne de la partie de connexion (121).

3. Dispositif électronique selon la revendication 2, dans lequel la partie de connexion (121) et la première couche de couvercle (11) forment une première structure en escalier.

4. Dispositif électronique selon la revendication 3, dans lequel la première partie décorative (211) comprend une surface de recouvrement (211a), une surface de connexion (211b) et une surface adhésive (211c), la surface de recouvrement (211a) étant reliée à la surface adhésive (211c) par la surface de connexion (211b), de sorte que la surface de recouvrement (211a) et la surface adhésive (211c) forment une seconde structure en escalier, la seconde structure en escalier coopérant avec la première structure en escalier, la surface de recouvrement (211a) recouvrant un bord de la première couche de couvercle (11), et la surface adhésive (211c) étant collée à la surface externe de la partie de connexion (121).

5. Dispositif électronique selon la revendication 4, dans lequel la surface de recouvrement (211a) est disposée parallèlement à la surface adhésive (211c) et la surface de connexion (211b) est agencée comme une surface inclinée.

6. L'appareil électronique selon la revendication 2, dans lequel la partie de connexion (121) s'étend dans la direction de la première partie de décoration (211), de sorte que la surface extérieure de la partie de connexion (121) est affleurante à la surface extérieure de la première couche de couverture (11).

7. L'appareil électronique selon l'une quelconque des revendications 2 à 6, dans lequel l'appareil électronique comprend en outre une première couche adhésive arrière (3), et la surface intérieure de la première partie de décoration (211) est collée à la surface extérieure de la partie de connexion (121) par l'intermédiaire de la première couche adhésive arrière (3).

8. L'appareil électronique selon la revendication 7, dans lequel l'appareil électronique comprend en outre une couche de collage (4), et la surface intérieure de la première partie de décoration (211) est collée à la surface extérieure de la partie de connexion (121) par l'intermédiaire de la couche de collage (4).

9. L'appareil électronique selon la revendication 8, dans lequel il existe des premières couches adhésives arrière, les deux premières couches adhésives arrière sont disposées à intervalle et la couche de collage (4) est située entre les deux premières couches adhésives arrière.

10. L'appareil électronique selon l'une quelconque des revendications 2 à 6, dans lequel l'appareil électronique comprend en outre une seconde couche adhésive arrière (5), et la surface extérieure de la seconde partie de décoration (212) est collée à la surface intérieure de la partie de connexion (121) par l'intermédiaire de la seconde couche adhésive arrière (5).
